# EUROPÄISCHE PATENTANMELDUNG

(11) **EP 3 244 477 A2**
(43) Veröffentlichungstag der Anmeldung: **15.11.2017**
(21) Anmeldenummer: 17169892.1
(22) Anmeldetag: 08.05.2017
(51) Int. Cl.: H01M 10/42, H01M 10/48, H01M 10/44, H01M 2/20, H02J 7/00, B60L 11/18, B60L 3/00

(54) **TRAKTIONSENERGIESPEICHERSYSTEM UND KONFIGURATIONSVERFAHREN HIERFÜR**

(30) Priorität: 13.05.2016 DE 102016005959
(71) Anmelder: MAN Truck & Bus AG, 80995 München (DE)
(72) Erfinder: Kratzer, Sebastian, 80997 München (DE); John, Dennis, 81371 München (DE)
(74) Vertreter: v. Bezold & Partner Patentanwälte - PartG mbB

(57) **Zusammenfassung**

Ein Traktionsenergiespeichersystem (100) für ein Fahrzeug wird beschrieben. Das Traktionsenergiespeichersystem (100) umfasst mehrere elektrische Energiespeicher (110). Jeder der Energiespeicher umfasst mehrere Zellmodule (120) und eine Energiespeichersteuerung (130). Jedes der Zellmodule umfasst mehrere Speicherzellen (122) und eine Zellmodulsteuerung (124). Jede der Zellmodulsteuerungen ist dazu ausgebildet, Messwerte auszugeben, welche die Speicherzellen im jeweiligen Zellmodul betreffen. Jede der Energiespeichersteuerungen ist dazu ausgebildet ist, die Messwerte von den Zellmodulen im jeweiligen Energiespeicher zu erhalten und abhängig von den erhaltenen Messwerten ein Signal zu erzeugen. Eine Systemsteuerung (140) ist dazu ausgebildet, die Signale von den Energiespeichersteuerungen zu erhalten, die erhaltenen Signale zu einem Systemsignal zu aggregieren und das Systemsignal auszugeben.

## Beschreibung

Die Erfindung betrifft ein Traktionsenergiespeichersystem und ein Verfahren zur Konfiguration eines solchen Traktionsenergiespeichersystems.

Die zumindest teilweise Elektrifizierung des Antriebsstrangs eines Fahrzeugs ist kostenintensiv. Zu den Kosten tragen die Entwicklung und die Erprobung des Energiespeichers wesentlich bei. Durch die Zahl verschiedener Anwendungsfälle und den damit verbundenen Entwicklungs- und Erprobungsaufwand vervielfachen sich die Kosten. Die Zahl der Anwendungsfälle ist durch mehrere Faktoren bestimmt. Zum einen besteht oftmals der Wunsch, eine möglichst große Anzahl von Fahrzeugderivaten zu elektrifizieren. Zum anderen besteht bei jedem Fahrzeugderivat regelmäßig Bedarf nach unterschiedlichen Elektrifizierungsgraden, beispielsweise einem Batterie-Elektrofahrzeug (BEV), einem Plug-in-Hybridfahrzeug (PHEV) und einem Hybrid-Elektrofahrzeug (HEV).

Das Dokument DE 10 2010 002 939 A1 beschreibt einen herkömmlichen Energiespeicher. Der Energiespeicher umfasst eine Vielzahl einzelner Speicherzellen, wobei Gruppen von Speicherzellen jeweils zu einem Speichermodul und die Speichermodule zum Energiespeicher verschaltet sind.

Das Dokument US 2007/0080662 A1 beschreibt einen weiteren herkömmlichen Energiespeicher, der über die Leistungsverschaltung hinaus einen Datenbus aufweist. Der Datenbus verbindet Modulsteuerungen an den einzelnen Zellmodulen mit einer Steuerung des Energiespeichers.

Um der Vielzahl verschiedener Anwendungsfälle gerecht zu werden, muss der herkömmliche Energiespeicher hinsichtlich der Anzahl seiner Zellmodule, der Steuerung des Energiespeichers und seiner Eigensicherheit für jeden Anwendungsfall entwickelt und erprobt werden.

Wachsende Anforderungen an die gespeicherte Traktionsenergie, insbesondere für Nutzfahrzeuge, erfordern eine größere Anzahl an Zellmodulen, so dass sich deren Ausfallwahrscheinlichkeit erhöht. Da der Ausfall eines einzelnen Zellmoduls den Austausch des gesamten Energiespeichers erfordert, kann der Einsatz herkömmlicher Energiespeicher bei Nutzfahrzeugen mit einem erhöhten Ausfallrisiko und zusätzlichen Wartungskosten verbunden sein.

Somit ist eine Aufgabe der Erfindung, eine Technik zur fahrzeugangepassten Speicherung von Traktionsenergie bereitzustellen, deren Entwicklungs- und Erprobungsaufwand nicht mit der Zahl der Anwendungsfälle steigt. Eine alternative oder weitere Aufgabe ist, eine Technik zur Speicherung von Traktionsenergie bereitzustellen, die eine zielgerichtete Wartung und Reparatur ermöglicht.

Diese Aufgaben werden durch ein Traktionsenergiespeichersystem für ein Fahrzeug und ein Verfahren zur Konfiguration des Traktionsenergiespeichersystems mit den Merkmalen der unabhängigen Ansprüche gelöst.

Gemäß einem Aspekt umfasst ein Traktionsenergiespeichersystem mehrere elektrische Energiespeicher. Jeder der Energiespeicher umfasst mehrere Zellmodule und eine Energiespeichersteuerung. Jedes der Zellmodule umfasst mehrere Speicherzellen und eine Zellmodulsteuerung. Jede der Zellmodulsteuerungen ist dazu ausgebildet, die Speicherzellen im jeweiligen Zellmodule betreffende Messwerte auszugeben. Jede der Energiespeichersteuerungen ist dazu ausgebildet, die Messwerte von den Zellmodulen im jeweiligen Energiespeicher zu erhalten und abhängig von den erhaltenen Messwerten ein Signal zu erzeugen. Das Traktionsenergiespeichersystem umfasst ferner eine Systemsteuerung, die dazu ausgebildet ist, die Signale von den Energiespeichersteuerungen zu erhalten, die erhaltenen Signale zu einem Systemsignal zu aggregieren und das Systemsignal auszugeben.

Die Aggregation der mehreren Signale zu einem Systemsignal durch die Systemsteuerung kann eine einheitliche Signalausgabe (oder Kommunikation) gegenüber dem Fahrzeug ermöglichen. Beispielsweise können verschiedene Fahrzeugderivate und/oder Fahrzeuge mit unterschiedlichen Elektrifizierungsgraden des Antriebsstrangs eine einheitliche Kommunikationsschnittstelle zum Traktionsenergiespeichersystem nutzen.

Ein Aufbau der fahrzeugseitigen Kommunikationsschnittstelle und ein Protokoll der fahrzeugseitigen Kommunikation des Traktionsenergiespeichersystems können für verschiedenen Anwendungsfällen gleich sein. Die Anwendungsfälle können sich hinsichtlich Anzahl und Verschaltung der Energiespeicher unterscheiden sein. Die Anzahl und die Verschaltung der Energiespeicher kann an einen Energie- und Leistungsbedarf des Fahrzeugs angepasst werden, ohne die fahrzeugseitige Kommunikation anzupassen.

Das hierarchisch strukturierte Traktionsenergiespeichersystem mit Energiespeichern auf einer Hierarchieebene und Zellmodulen auf einer darunterliegenden Hierarchieebene kann die Wartung und/oder die Reparatur vereinfachen. Beispielsweise kann das Systemsignal eine Meldung enthalten. Die Meldung kann eine Fehlermeldung, Warnmeldung oder Diagnosemeldung sein.

Das Fahrzeug kann ein Landfahrzeug, ein Wasserfahrzeug (beispielsweise ein Schiff oder Unterseeboot) oder ein Luftfahrzeug sein. Alternativ oder in Kombination kann das Fahrzeug ein Nutzfahrzeug (beispielsweise ein Lastkraftwagen zur Güterbeförderung und/oder ein Bus zur Personenbeförderung) oder ein Personenkraftwagen sein.

Die Diagnosemeldung kann aufgrund der von den einzelnen Energiespeichern erhaltenen Signale einen einzelnen Energiespeicher angeben. Beispielsweise kann einer der Energiespeicher als fehlerhaften oder gealtert angegeben sein. Ferner kann die Diagnosemeldung aufgrund zellmodul-spezifischer Messwerte ein einzelnes Zellmodul (beispielsweise als fehlerhaft oder gealtert) angeben. Dies ist vorteilhaft, falls eine nutzbare Leistung des Traktionsenergiespeichersystems vom leistungsschwächsten Energiespeicher oder Zellmodul abhängt. Durch einen gezielten Austausch des angegebenen Energiespeichers oder Zellmoduls kann die Leistungsfähigkeit des Traktionsenergiespeichersystem zeit- und kosteneffektiv wiederhergestellt werden.

Die Energiespeichersteuerung jedes Energiespeichers kann mit den jeweiligen Zellmodulsteuerungen desselben Energiespeichers zum Datenaustausch verbunden sein, beispielsweise über einen seriellen Datenbus. Die Messwerte können eine Spannung (z. B., eine Modulspannung aller Speicherzellen) und/oder eine Temperatur (z. B. eine Modultemperatur, einen Temperaturmittelwert oder ein Temperaturmaximum) der Zellmodule angeben.

Jede Zellmodulsteuerung kann dazu ausgebildet sein, die Messwerte zu erfassen und/oder an die jeweils verbundene Energiespeichersteuerung auszugeben. Die Zellmodulsteuerung kann an zumindest einer der jeweiligen Speicherzellen angrenzend oder anliegend angeordnet sein. Sensoren zur Erfassung der Messwerte können in der Zellmodulsteuerung angeordnet sein.

Jede Energiespeichersteuerung kann dazu ausgebildet sein, auf Grundlage der von den jeweiligen Zellmodulen erhaltenen Messwerte, das Signal zu erzeugen. Alternativ oder ergänzend kann die Energiespeichersteuerung dazu ausgebildet sein, weitere Messwerte (z. B. die Leerlaufspannung des Energiespeichers oder einen vom Energiespeicher abgegebenen Strom) zu erfassen, und auf deren Grundlage das Signal (z. B. zur Angabe eines Energiespeicherzustands) zu erzeugen. Die weiteren Messwerte können einen vom Energiespeicher abgegebenen Strom umfassen.

Die Signale und/oder das Systemsignal können einen Messwert, einen Zustandswert oder einen Diagnosewert angeben. Das Aggregieren der Signale zum Systemsignal kann eine Mittelwertbildung, eine Minimumbestimmung und/oder eine Maximumbestimmung umfassen.

Die Systemsteuerung kann zur bidirektionalen Kommunikation mit dem Fahrzeug ausgebildet sein. Die Systemsteuerung kann dazu ausgebildet sein, ein Fahrzeugsignal zu erhalten. Die Systemsteuerung kann das Fahrzeugsignal analysieren und abhängig von der Analyse ein Steuersignal an mindestens eine der Energiespeichersteuerungen ausgeben. Das Fahrzeugsignal kann eine Steuerungsanweisung (z. B. eine Fahrzeuganweisung) und/oder eine Zustandsabfrage umfassen. Das Verfahren, oder zumindest die Ausgabe des Systemsignals, kann in Reaktion auf die fahrzeugseitige Zustandsabfrage ausgeführt werden.

Eine der Energiespeichersteuerungen kann die Funktion der Systemsteuerung ausführen. Diese eine Energiespeichersteuerung kann auch als Master-Energiespeichersteuerung bezeichnet werden. Jede weitere Energiespeichersteuerung des Traktionsenergiespeichersystems kann auch als Slave-Energiespeichersteuerung bezeichnet werden.

Die Funktion der Systemsteuerung kann in jeder der Energiespeichersteuerungen implementiert sein und in einer der Energiespeichersteuerungen zur Ausführung aktiviert sein. Die Funktion der Systemsteuerung kann in nur einer der Energiespeichersteuerungen zur Ausführung aktiviert sein. In allen anderen Energiespeichersteuerungen kann die Funktion der Systemsteuerung deaktiviert sein. Jede der Energiespeichersteuerungen kann dazu ausgebildet sein, in einem ersten Betriebszustand die Funktion auszuführen und in einem zweiten Betriebszustand die Funktion nicht auszuführen.

Jeder der Energiespeicher kann ferner eine erste Datenschnittstelle und eine von der ersten Datenschnittstelle verschiedene zweite Datenschnittstelle umfassen. Die Datenschnittstellen können jeweils innerhalb des Energiespeichers mit der Energiespeichersteuerung verbunden sein.

Bei jenen Energiespeichern, welche nicht die Funktion der Systemsteuerung ausführen, kann die erste Datenschnittstelle außerhalb des Energiespeichers unverbunden sein oder entfallen. Alternativ oder ergänzend kann bei jenen Energiespeichern die zweite Datenschnittstelle zur Ausgabe des Signals mit der zweiten Datenschnittstelle des Energiespeichers verbunden sein, welcher die Funktion der Systemsteuerung ausführt.

Bei jenem Energiespeicher, welcher die Funktion der Systemsteuerung ausführt, kann die erste Datenschnittstelle außerhalb des Energiespeichers mit dem Fahrzeug verbunden sein zur Ausgabe des Systemsignals. Alternativ oder ergänzend kann die zweite Datenschnittstelle jenes Energiespeichers zum Erhalt der Signale mit den zweiten Datenschnittstellen der Energiespeicher verbunden sein, welche nicht die Funktion der Systemsteuerung ausführen. Die zweiten Datenschnittstellen aller Energiespeicher können an einen gemeinsamen Datenbus angeschlossen sein.

Jeder der Energiespeicher kann ferner eine Hochvoltschnittstelle zum Austausch elektrischer Energie mit einem Antriebsstrang des Fahrzeugs umfassen. Alternativ oder ergänzend kann jeder der Energiespeicher mindestens ein von der Energiespeichersteuerung des jeweiligen Energiespeichers gesteuertes Schaltschütz umfassen. Das mindestens eine Schaltschütz kann dazu ausgebildet sein, die Zellmodule des jeweiligen Energiespeichers mit der Hochvoltschnittstelle nach Vorgabe der Energiespeichersteuerung zu verbinden oder zu trennen.

Die Systemsteuerung kann dazu ausgebildet sein, über die erste Datenschnittstelle ein Notabschaltsignal vom Fahrzeug zu erhalten. Die Systemsteuerung kann ferner dazu ausgebildet sein, beim Erhalt des Notabschaltsignals ein Steuersignal zur Trennung der Schaltschütze an die Energiespeichersteuerungen zu senden.

Die Hochvoltschnittstellen der Energiespeicher können parallel geschaltet sein. Die Zellmodule innerhalb jedes Energiespeichers können in Reihe geschaltet sein.

Die Signale können einen Zustand des jeweiligen Energiespeichers angeben (der auch als Energiespeicherzustand bezeichnet werden kann). Das aggregierte Systemsignal kann einen Systemzustand des Traktionsenergiespeichersystems angeben. Ein Datenformat zur Angabe des Zustands, eine physikalische Definition der jeweils genutzten Datenschnittstelle und/oder ein Kommunikationsprotokoll kann für die Signale und das aggregierte Systemsignal übereinstimmend sein.

Der Zustand und der Systemzustand können einen gegenwärtigen Betriebszustand des jeweiligen Energiespeichers bzw. des Traktionsenergiespeichersystems angeben. Alternativ oder ergänzend kann der Zustand und der Systemzustand eine (z. B. prognostizierte) Leistungsfähigkeit des jeweiligen Energiespeichers bzw. des Traktionsenergiespeichersystems angeben. Die Signale der Energiespeichersteuerungen können einen gegenwärtigen Ladezustand und/oder einen (z. B. zukünftig entnehmbaren) Maximalstrom des jeweiligen Energiespeichers angeben. Der Ladezustand kann, beispielsweise mittels einer tabellierten Ladekurve, aus der gemessenen Spannung (z. B. der Leerlaufspannung) bestimmt werden. Der entnehmbare Maximalstrom kann, beispielsweise mittels einer tabellierten Funktion, aus dem Ladezustand und/oder der gemessenen Temperatur bestimmt werden. Jede die Funktion der Systemsteuerung nicht ausführende Energiespeichersteuerung kann ein eigenes Signal (z. B. mit einem eigenen Datensatz und/oder mittels eines eigenen Datagramms) an die die Funktion der Systemsteuerung ausführende Energiespeichersteuerung ausgeben.

Die Energiespeichersteuerungen können jeweils dazu ausgebildet sein, den Betriebszustands des jeweiligen Energiespeichers festzustellen. Der Betriebszustand kann auf Grundlage der von den Zellmodulen erhaltenen Messwerte und/oder den weiteren Messwerten bestimmt werden. Die Energiespeichersteuerung kann ferner dazu ausgebildet sein, bei Feststellung eines unzulässigen Betriebszustands das jeweilige Schaltschütz oder die jeweiligen Schaltschütze zu trennen und/oder eine Fehlermeldung als das Signal zu erzeugen und an die Systemsteuerung auszugeben. Das Signal der betreffenden Energiespeichersteuerung kann den unzulässigen Betriebszustand und/oder die Unzulässigkeit als solche angeben.

Die Feststellung des Zustands kann ein Messen des durch den jeweiligen Energiespeicher abgegebenen Stroms umfassen. Der unzulässige Betriebszustand kann bei Überschreiten des entnehmbaren Maximalstroms festgestellt werden. Alternativ oder ergänzend können die Signale jeweils den entnehmbaren Maximalstrom des jeweiligen Energiespeichers angeben. Das aggregierte Systemsignal kann das *n*-Fache des Kleinsten der signalisierten entnehmbaren Maximalströme angeben. Der Faktor n kann die Anzahl der Energiespeicher sein, optional nach Abzug der Zahl jener Energiespeicher, für die ein unzulässiger Betriebszustand festgestellt oder signalisiert ist.

Die Feststellung des Zustands kann ein Bestimmen eines Ladezustands des jeweiligen Energiespeichers oder einer dem jeweiligen Energiespeicher entnehmbaren Ladung umfassen. Der unzulässige Betriebszustand kann bei Unterschreiten einer Mindestladung festgestellt werden. Die erzeugten Signale können jeweils den Ladezustand oder die entnehmbare Ladung des jeweiligen Energiespeichers angeben. Der Systemzustand kann die Summe der signalisierten entnehmbaren Ladungen angeben.

Die entnehmbare Ladung kann durch zeitliche Integration des Stroms bestimmt werden. Alternativ oder ergänzend kann die entnehmbare Ladung aufgrund der gemessenen Spannung mittels einer tabellierten Funktion bestimmt werden.

Jeder Energiespeicher kann einen Schutzleiterkontakt umfassen. Der Schutzleiterkontakt kann mit einer Karosserie des Fahrzeugs verbunden oder verbindbar sein. Die Feststellung des Zustands kann ein Messen des Isolationswiderstands zwischen einem Pol (oder beiden Polen) der Hochvoltschnittstelle und dem Schutzleiterkontakt des jeweiligen Energiespeichers umfassen. Der unzulässige Betriebszustand kann bei Unterschreiten eines Isolationswiderstandswerts festgestellt werden.

Jeder Energiespeicher kann in einem eigenen Gehäuse angeordnet sein. In einer oder mehreren Außenflächen des Gehäuses kann mindestens eines der folgenden Merkmale angeordnet sein: die erste Datenschnittstelle, die zweite Datenschnittstelle, die Hochvoltschnittstelle und der Schutzleiterkontakt.

Gemäß einem weiteren Aspekt ist ein Verfahren zum Konfigurieren eines Traktionsenergiespeichersystems für ein Fahrzeug, insbesondere für ein Nutzfahrzeug, bereitgestellt. Das Verfahren umfasst den Schritt des Bestimmens einer Energie- und/oder Leistungsanforderung für einen Antriebstrang des Fahrzeugs. Das Verfahren umfasst ferner den Schritt des Bestimmens einer Anzahl und/oder einer Verschaltung von elektrischen Energiespeichern in Abhängigkeit von der Energie- und/oder Leistungsanforderung. Jeder der Energiespeicher umfasst mehrere Zellmodule und eine Energiespeichersteuerung. Jedes der Zellmodule umfasst mehrere Speicherzellen und eine Zellmodulsteuerung. Jede der Zellmodulsteuerungen ist dazu ausgebildet, die Speicherzellen im jeweiligen Zellmodul betreffende Messwerte auszugeben. Jede der Energiespeichersteuerungen ist dazu ausgebildet, die Messwerte von den Zellmodulen im jeweiligen Energiespeicher zu erhalten und abhängig von den erhaltenen Messwerten ein Signal zu erzeugen. Das Verfahren umfasst ferner den Schritt des Konfigurierens einer Systemsteuerung, die Signale von den Energiespeichersteuerungen zu erhalten, die erhaltenen Signale zu einem Systemsignal zu aggregieren und das Systemsignal auszugeben.

Die Funktion der Systemsteuerung kann in jeder der Energiespeichersteuerungen implementiert sein. Das Konfigurieren der Systemsteuerung kann den Schritt des Aktivierens der implementierten Funktion zur Ausführung der Funktion der Systemsteuerung in einer der Energiespeichersteuerungen umfassen. Das Konfigurieren der Systemsteuerung kann ferner den Schritt des Deaktivierens der implementierten Funktion bei allen anderen Energiespeichersteuerungen umfassen.

Das Verfahren kann ferner jedes im Zusammenhang mit dem Systemaspekt genannte Merkmal oder einen Schritt des Bereitstellen eines solchen Merkmals umfassen.

Gemäß weiteren Aspekten sind ein Fahrzeug, beispielsweise ein Nutzfahrzeug, mit einem solchen Traktionsenergiespeichersystem und ein Verfahren zur Herstellung eines Fahrzeugs, beispielsweise eines Nutzfahrzeugs, mit einem solchen Konfigurationsverfahren bereitgestellt.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: ein schematisches Blockschaltbild eines ersten Ausführungsbeispiels eines Traktionsenergiespeichersystems für ein Fahrzeug;
- Figur 2: ein schematisches Blockschaltbild eines zweiten Ausführungsbeispiels eines Traktionsenergiespeichersystems für ein Fahrzeug;
- Figur 3: ein schematisches Blockschaltbild eines dritten Ausführungsbeispiels eines Traktionsenergiespeichersystems für ein Fahrzeug;
- Figur 4: ein funktionales Blockdiagramm einer beispielhaften Signalverarbeitung im Traktionsenergiespeichersystem, die in den Ausführungsbeispielen der Figuren 1 bis 3 implementierbar ist; und
- Figur 5: ein Ablaufdiagramm eines Verfahrens zum Konfigurieren eines Traktionsenergiespeichersystems für ein Fahrzeug.

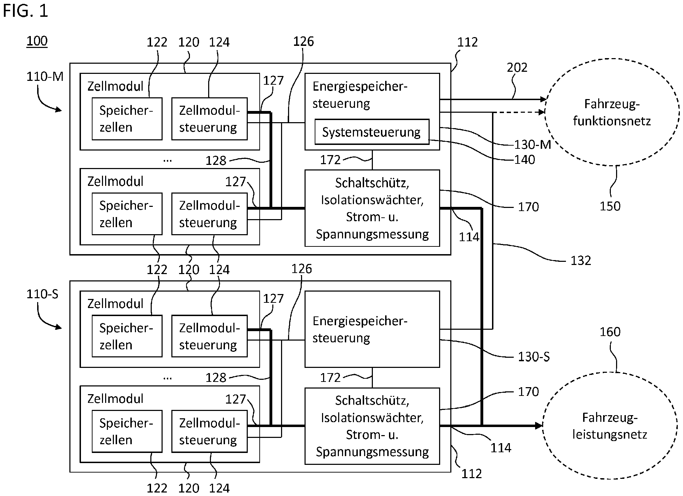

Figur 1 zeigt ein schematisches Blockschaltbild eines allgemein mit Bezugszeichen 100 bezeichneten Traktionsenergiespeichersystems (TES-Systems) für ein Fahrzeug, beispielsweise für ein Nutzfahrzeug. Das TES-System 100 umfasst mindestens zwei Energiespeicher 110. Jeder Energiespeicher 110 umfasst jeweils mehrere Zellmodule 120 und eine Energiespeichersteuerung 130.

Jedes der Zellmodule 120 umfasst mehrere Speicherzellen 122 und eine Zellmodulsteuerung 124. Jede Zellmodulsteuerung 124 erfasst Messwerte betreffend die jeweils zugeordneten Speicherzellen 122. Zum Beispiel erfasst die Zellmodulsteuerung 124 eine Spannung und/oder eine Temperatur der Speicherzellen 122 im jeweiligen Zellmodul 120. Jede der Zellmodulsteuerungen 124 ist dazu ausgebildet, die Messwerte auf einem internen Datenbus 126 auszugeben. Der interne Datenbus 126 des Zellmoduls 120 kann ein serieller Bus, beispielsweise für ein Controller Area Network (CAN), sein.

Jede der Energiespeichersteuerungen 130 ist dazu ausgebildet, die Messwerte von den Zellmodulen 120 im jeweiligen Energiespeicher 110 zu erhalten. Hierzu ist jede Energiespeichersteuerung 130 mit dem jeweiligen internen Datenbus 126 verbunden.

Jede der Energiespeichersteuerungen 130 ist ferner dazu ausgebildet, abhängig von den erhaltenen Messwerten ein Signal zu erzeugen. Zur Ausgabe des Signals oder anderer Signale sind die Energiespeichersteuerung 130 mit einem externen Datenbus 132 verbunden. Der externe Datenbus 132 des TES-Systems 100 kann ein serieller Bus sein, beispielsweise ein weiterer CAN-Bus.

Die Energiespeicher 110 sind jeweils in einem eigenen Gehäuse 112 angeordnet. Der interne Datenbus 126 verläuft innerhalb des jeweiligen Gehäuses 112. Der externe Datenbus 132 verläuft außerhalb der Gehäuse 112.

Das TES-System 100 umfasst ferner eine Systemsteuerung 140, die dazu ausgebildet ist, Signale von den Energiespeichersteuerungen 130 zu erhalten, auf Grundlage der erhaltenen Signale ein Systemsignal zu erzeugen und das Systemsignal an ein Funktionsnetz 150 des Fahrzeugs auszugeben. Das Funktionsnetz 150 kann ein Niederspannungsbordnetz und/oder ein Bussystem zur Kommunikation zwischen Fahrzeugfunktionen umfassen. Das Niederspannungsbordnetz kann eine Versorgungsspannung von 24 Volt bereitstellen.

In einer ersten Variante kann der externen Datenbus 132 ausschließlich zur Kommunikation zwischen den Energiespeichern 110 (bzw. deren Energiespeichersteuerungen 130) ausgebildet sein. Das Funktionsnetz 150 kann über eine eigene Schnittstelle und/oder eine eigene Busanbindung 202 mit der Systemsteuerung 140 verbunden sein. Hierzu kann ein eigener Bus (beispielsweise ein eigener CAN-Bus) zur Fahrzeugkommunikation vorgesehen sein, der unabhängig vom externen Datenbus 132 arbeitet.

In einer zweiten Variante kann der externe Datenbus 132 (anstelle der separaten Busanbindung 202 oder ergänzend hierzu) mit dem Funktionsnetz 150 verbunden sein (gestrichelter Pfeil).

In beiden Varianten kann das TES-System 100 eine einheitliche Fahrzeugschnittstelle zum Funktionsnetz 150 des Fahrzeugs umfassen, die unabhängig von der Anzahl der eingesetzten und miteinander verbundenen Energiespeicher 110 ist. Insbesondere bei der ersten Variante kann die Fahrzeugschnittstelle auf eine physischen Ebene (z. B. hinsichtlich Steckverbindung und/oder Signalverlauf) oder einer Bitübertragungsschicht (z. B. hinsichtlich eines Kommunikationsprotokolls) unabhängig von einer veränderlichen Zusammensetzung der vom TES-System 100 umfassten Energiespeicher 110 sein.

Die Systemsteuerung 140 kann in einem Energiespeicher 110, beispielsweise in einer der Energiespeichersteuerungen 130, implementiert sein. Alternativ oder ergänzend kann die Systemsteuerung 140 außerhalb der Energiespeicher 110 implementiert sein, beispielsweise als eine eigene Vorrichtung in einem separaten Gehäuse oder eine Komponente des Funktionsnetzes 150. Ein Energiespeicher 110, welcher die Funktion der Systemsteuerung 140 ausführt, wird auch als Master-Energiespeicher 110-M bezeichnet. Der oder die Energiespeicher 110, welche nicht die Funktion der Systemsteuerung 140 ausführen, werden auch als Slave-Energiespeicher 110-S bezeichnet. Entsprechende Bezeichnungen gelten für die jeweiligen Energiespeichersteuerungen 130-M bzw. 130-S.

Die Systemsteuerung 140 erhält die Signale von den Energiespeichersteuerungen 130-S über den externen Datenbus 132. Das Systemsignal kann von der Systemsteuerung 140 an das Funktionsnetz 150 über einen direkten Anschluss der Systemsteuerung 140 an das Funktionsnetz 150 ausgegeben werden. Alternativ oder ergänzend, wie im in Figur 1 gezeigten Ausführungsbeispiel, kann das Systemsignal an das Funktionsnetz 150 über den externen Datenbus 132 ausgegeben werden. Hierzu ist das Funktionsnetz 150 (beispielsweise direkt oder über ein Gateway) an den externen Datenbus 132 angeschlossen.

Die Speicherzellen 122 eines Zellmoduls 120 sind (beispielsweise in Reihe) zusammengeschalten. Die aus der Zusammenschaltung resultierenden Anschlussklemmen 127 sind über Stromschienen 128 verbunden. Die Stromschienen 128 können aus Aluminium oder einem anderen leitenden Material gefertigt sein.

Die aus dem Verbund der Zellmodule 120 jedes Energiespeichers 110 resultierenden Pole bilden eine Energiespeicherhochvoltschnittstelle 114 (nachfolgend: Hochvoltschnittstelle). Die Hochvoltschnittstellen 114 sind parallel oder in Reihe verschaltet und mit einem Leistungsnetz 160 des Fahrzeugs verbunden oder verbindbar. Das Leistungsnetz 160 kann ein Hochvoltbordnetz des Fahrzeugs umfassen. Ein Antriebsstrang (beispielsweise ein Kurbelwellen-Startergenerator) des Fahrzeugs kann mit dem Leistungsnetz 160 verbunden sein zur Entnahme der im TES-System 100 gespeicherten Energie und/oder zum Laden des TES-Systems 100, beispielsweise bei einem rekuperativen Bremsvorgang. Das Leistungsnetz 160 kann auch als Traktionsnetz bezeichnet werden. Das Leistungsnetz 160 kann eine Spannung von mindestens 60 Volt, beispielsweise zwischen 540 Volt und 738 Volt, bereitstellen. Alternativ oder ergänzend kann das Leistungsnetz 160 jedes Hochvolt-Bordnetz im Sinne des Fahrzeugbaus sein. Eine Topologie des Leistungsnetzes 160 und/oder dessen Komponenten können das Leistungsnetz 160 gegenüber einem Niedervoltnetz (von beispielsweise 24 Volt) abgrenzen. Die Topologie kann einer bekannten Fahrzeugtopologie für Hybrid-, Plug-In- oder Elektrofahrzeuge entsprechen oder angepasst sein. Die Komponenten können einen Umrichter (oder Inverter) für Fahrantriebe, das TES-System 100, eine oder mehrere elektrische Maschinen, Nebenaggregate und/oder einen Kabelbaum umfassen.

Vorzugsweise ist in jedem Energiespeicher 110 mindestens ein Schaltschütz 170 zwischen den Zellmodulen 120 und dem Leistungsnetz 160 angeordnet. Das Schaltschütz 170 wird beziehungsweise die Schaltschütze 170 werden von der Energiespeichersteuerung 130 im gleichen Energiespeicher 110 über eine Steuerverbindung 172 gesteuert zum wahlweisen Trennen des jeweiligen Energiespeichers 110 vom Leistungsnetz 160. Das Schaltschütz 170 kann Teil einer Schützbox sein, die ferner die elektrische Isolation der Stromschienen 128 (z. B. gegenüber einem Referenzpotential) überwacht, den über die Stromschienen 128 fließenden Strom misst und/oder die an den Stromschienen 128 anliegende Spannung misst.

In einem Betriebszustand des TES-Systems 100 sind die Schaltschütze 170 aller (funktionsfähigen) Energiespeicher 110 geschlossen (Schließstellung). Durch Öffnen des Schaltschützes 170 oder der Schaltschütze 170 kann der jeweilige Energiespeicher 110 im Betriebszustand des TES-Systems 100 aus dem Verbund des TES-Systems 100 isoliert werden, beispielsweise bei einem unzulässigen Energiespeicherzustand. Vermittels der jeweiligen Energiespeichersteuerung 130 bewirkt die Systemsteuerung 140 in einem Ruhezustand des TES-Systems 100 die Offenstellung der Schaltschütze 170 aller Energiespeicher 110.

Weiterhin kann ein Vorladeschaltschütz (oder kurz: Vorladeschütz) und ein mit dem Vorladeschaltschütz in Reihe geschalteter Vorladewiderstand in jedem Energiespeicher 110 parallel zu einem der Schaltschütze 170 (die auch als Hauptschütze bezeichnet werden können) verbaut sein. Der Vorladewiderstand kann ein Kaltleiter oder PTC-Widerstand sein. Unmittelbar vor der Schließstellung (z. B. für den Betriebszustand) kann die Energiespeichersteuerung 130 den Vorladeschaltschütz schließen. Die Energiespeichersteuerung 130 kann die Schließstellung der Schaltschütze 170 bewirken, sobald einen Spannungsdifferenz am Vorladewiderstand einen Schwellwert unterschreitet.

Die Systemsteuerung 140 ist ferner zur bidirektionalen Kommunikation mit dem Funktionsnetz 150 des Fahrzeugs ausgebildet. Beispielsweise können die Systemsignale in Reaktion auf ein Fahrzeugsignal erzeugt und ausgegeben werden. Ferner kann das Fahrzeugsignal eine Steuerungsanweisung umfassen. Die Systemsteuerung 140 analysiert die Steuerungsanweisung zur Bestimmung derjenigen Energiespeicher 110, die zur Umsetzung der Steuerungsanweisung relevant sind, und gibt ein Steuersignal an die Energiespeichersteuerungen 130 der betreffenden Energiespeicher 110 aus.

Das TES-System 100 kann durch den modularen Aufbau auf der Ebene der Energiespeicher 110 skalierbar eingesetzt werden. Die Energiespeicher 110 sind mehrfach parallel oder seriell verschaltbar. Durch die Wahl der Verschaltung und der Anzahl verschalteter Energiespeicher 110 ist das TES-System 100 auf eine Fahrzeug-spezifische Leistungs- und Energieanforderung ausgestaltbar. Diese Anforderungen hängen vom Grad der Elektrifizierung des Antriebsstrangs des Fahrzeugs ab. Ferner kann die Leistungsanforderung durch eine Transportleistung des Fahrzeugs, insbesondere des Nutzfahrzeugs, und die Energieanforderung durch eine Reichweite des Fahrzeugs bestimmt sein.

Die Systemsteuerung 140 stellt hinsichtlich einer physischen Schnittstelle und eines Kommunikationsprotokolls eine einheitliche Datenschnittstelle zum Fahrzeug bereit, die unabhängig von der Fahrzeug-spezifischen Ausgestaltung des TES-Systems 100 ist. Die mehreren Energiespeicher 110 verhalten sich aufgrund der Kommunikation über die Systemsteuerung 140 gegenüber dem Fahrzeug wie ein entsprechend großer Energiespeicher. Dadurch wird ein Fahrzeug-spezifischer Integrationsaufwand minimiert.

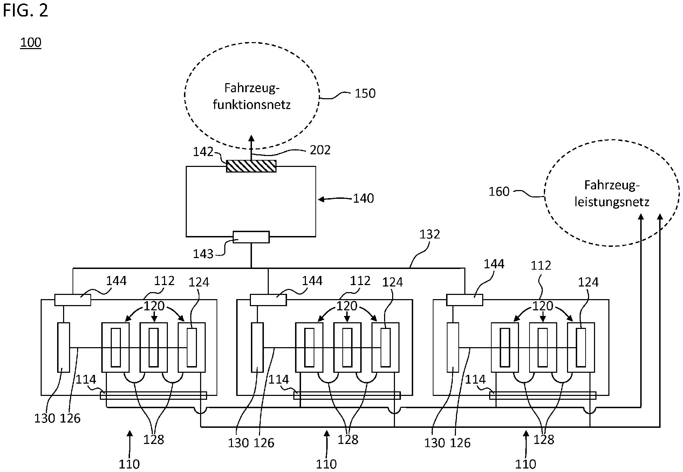

Figur 2 zeigt ein schematisches Blockschaltbild eines zweiten Ausführungsbeispiels eines TES-Systems 100. Mit den anderen Ausführungsbeispielen übereinstimmende Bezugszeichen bezeichnen entsprechende oder identische Merkmale.

Die Systemsteuerung 140 ist außerhalb der Gehäuse 112 der Energiespeicher 110 angeordnet. Die Systemsteuerung 140 umfasst eine erste Datenschnittstelle 142 für die fahrzeugseitige Kommunikation. Beispielsweise ist die erste Datenschnittstelle 142 mit dem Funktionsnetz 150 und/oder einer Motorsteuerung verbunden. Ferner umfasst die Systemsteuerung 140 eine zweite Datenschnittstelle 143, die über den externen Datenbus 132 mit Datenschnittstellen 144 der Energiespeicher 110 verbunden ist. Die Systemsteuerung 140 erhält die Signale der einzelnen Energiespeicher 110 über die zweite Datenschnittstelle 143. Das Systemsignal wird über die erste Datenschnittstelle 142 ausgegeben.

Die Hochvoltschnittstellen 114 der einzelnen Energiespeicher 110 sind parallel verschaltet und an das Leistungsnetz 160 und/oder einen Wechselrichter angeschlossen.

Die erste Datenschnittstelle 142 ist an einen seriellen Bus 202 des Fahrzeugfunktionsnetzes 150, beispielsweise einen vom TES-System 100 unabhängigen CAN-Bus, angeschlossen.

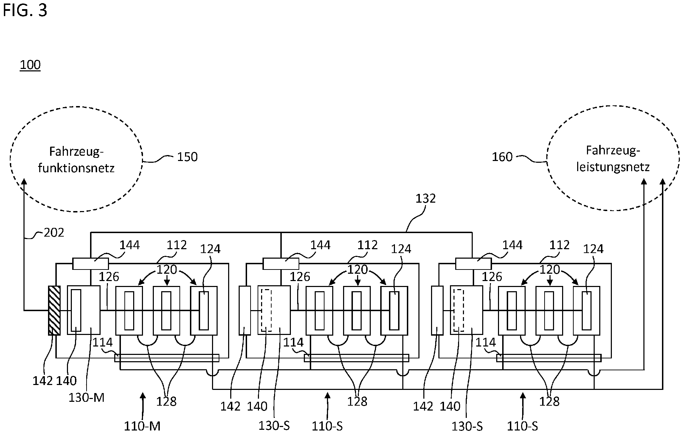

Figur 3 zeigt ein schematisches Blockschaltbild eines dritten Ausführungsbeispiels eines TES-Systems 100 für ein Fahrzeug. Das dritte Ausführungsbeispiel unterscheidet sich vom zweiten Ausführungsbeispiel dadurch, dass die Funktion der Systemsteuerung 140 in einem Energiespeicher 110-M der Energiespeicher 110 ausgeführt wird. Hierzu umfasst der Energiespeicher 110-M die erste Datenschnittstelle 142. Über eine zweite Datenschnittstelle 144 erhält der Energiespeicher 110-M die Signale der anderen Energiespeicher 110-S, die nicht die Funktion der Systemsteuerung 140 ausführen. Die erste Datenschnittstelle 142 und die zweite Datenschnittstelle 144 sind jeweils im Energiespeicher 110-M mit der Energiespeichersteuerung 130-M verbunden, die die Funktion der Systemsteuerung 140 ausführt.

Alle Energiespeicher 110-M und 110-S (oder zumindest deren Energiespeichersteuerungen 130-M bzw. 130-S) sind vorzugsweise baugleich. Auch die Energiespeicher 110-S können eine erste Datenschnittstelle 142 umfassen, die außerhalb des Energiespeichers 110-S unverbunden ist. Die zweiten Datenschnittstellen 144 aller Energiespeicher 110-M und 110-S sind über den externen Datenbus 132 verbunden.

In einer bevorzugten Ausgestaltung ist die Funktion der Systemsteuerung 140 auch in jeder Energiespeichersteuerung 130-S der Energiespeicher 110-S implementiert und nicht zur Ausführung aktiviert (gezeigt als gestrichelter Funktionsblock in Figur 3). Durch Setzen eines oder mehrerer Parameter der Energiespeichersteuerung 130 kann die Funktion der Systemsteuerung 140 wahlweise zur Ausführung aktiviert und deaktiviert werden.

Die in den Figuren 2 und 3 gezeigte Parallelschaltung der drei Hochvoltschnittstellen 114 ist beispielhaft. Abhängig von den Anforderungen des Fahrzeugleistungsnetzes 160 (z. B. hinsichtlich Strom, Spannung, Leistung und/oder Energie) kann eine größere Anzahl an Energiespeichern 110 und/oder eine andere Verschaltung der Hochvoltschnittstellen 114 eingesetzt werden. Insbesondere können die Hochvoltschnittstellen 114 innerhalb jeweils einer Gruppe von Energiespeichern 110 in Reihe geschaltet sein, und die Gruppen untereinander parallel geschaltet sein.

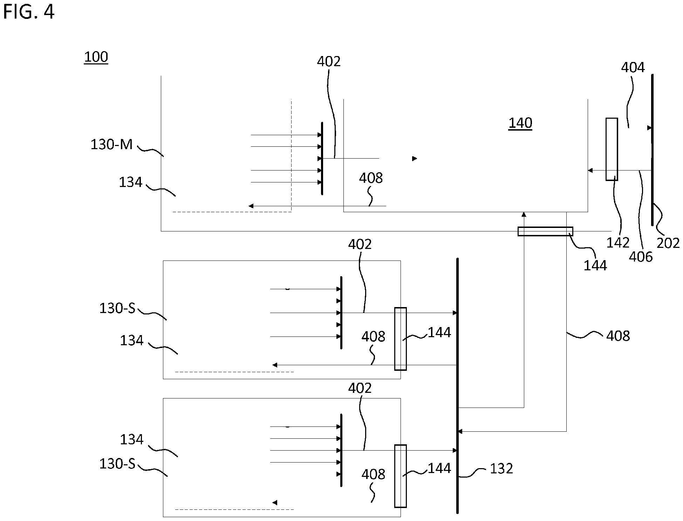

Figur 4 zeigt ein funktionales Blockdiagramm des TES-Systems 100, dessen funktionale Merkmale optional in jedem der vorgenannten Ausführungsbeispiele implementiert sind. Die funktionalen Merkmale können zumindest teilweise durch einen anwendungsspezifischen integrierten Schaltkreis (ASIC) implementiert sein und/oder in einem Speicher kodiert sein, auf den ein Prozessor zur Ausführung der funktionalen Merkmale zugreift.

Die Energiespeichersteuerung 130-M, welche die Funktion der Systemsteuerung 140 ausführt, kann aus einem Slave-Funktionsumfang 134 und dem Funktionsumfang der Systemsteuerung 140 zusammengesetzt sein. Der Slave-Funktionsumfang 134 kann dem Funktionsumfang für den Einzelbetrieb eines einzigen Energiespeichers und/oder dem Betrieb als Slave-Energiespeicher 110-S entsprechen. Der Slave-Funktionsumfang 134 kann mit dem (aktiven) Funktionsumfang der anderen Energiespeichersteuerungen 130-S übereinstimmen. Der Slave-Funktionsumfang 134 kann einen bestehenden Funktionsumfang eines herkömmlichen Energiespeichers beinhalten. Dadurch kann der Energiespeicher 110 abwärtskompatibel zum Einzelbetrieb sein.

Die Speicherzellen 120 im Energiespeicher 110-M betreffende Daten werden von der Energiespeichersteuerung 130-M in ein Anwendungsformat der Systemsteuerung 140 multiplexiert und an einer virtuellen oder physischen Schnittstelle als Signal 402 des Energiespeichers 110-M an die Systemsteuerung 140 übergeben. Entsprechende Daten betreffend die Speicherzellen 120 der jeweils anderen Energiespeicher 110-S werden in den jeweiligen Energiespeichersteuerungen 130-S in das Anwendungsformat der Systemsteuerung 140 multiplexiert und als das Signal 402 des Energiespeichers 110-S an der zweiten Datenschnittstelle 144 des jeweiligen Energiespeichers 110-S mittels des externen Datenbusses 132 an die Systemsteuerung 140 ausgegeben. Auf Grundlage der Signale 402 der Energiespeicher 110 gibt die Systemsteuerung 140 das Systemsignal 404 an der ersten Datenschnittstelle 142 aus.

In der entgegengesetzten Kommunikationsrichtung kann die Systemsteuerung 140 ein Fahrzeugsignal 406 an der ersten Datenschnittstelle 142 erhalten. Optional verarbeitet die Systemsteuerung 140 das Fahrzeugsignal 406. Die Systemsteuerung 140 leitet (gegebenenfalls nach der Signalverarbeitung) das Fahrzeugsignal 406 selektiv weiter oder gibt ein aus dem Fahrzeugsignal 406 abgeleitetes Steuersignal 408 an den Slave-Funktionsumfang 134 der jeweils betreffenden Energiespeichersteuerungen 130-M und/oder 130-S aus.

Die Konfiguration einer jeden Energiespeichersteuerung 130 als Master-Energiespeichersteuerung 130-M mit aktivierter Funktion der Systemsteuerung 140 oder als Slave-Energiespeichersystemsteuerung 130-S mit deaktivierter Funktion der Systemsteuerung 140 kann dadurch erreicht werden, dass die in allen Energiespeichersteuerungen 130 implementierte Funktion der Systemsteuerung 140 im deaktivierten Zustand eine Weiterleitungsfunktion ausführt. Die Weiterleitungsfunktion leitet die Signale 402 (d.h., die multiplexierten Daten) direkt an die zweite Datenschnittstelle 144 des jeweiligen Energiespeichers 110-S zur Ausgabe weiter. Die an der zweiten Datenschnittstelle 144 des jeweiligen Energiespeichers 110-S erhaltenen Steuersignale 408 werden an den Slave-Funktionsumfang 134 der Energiespeichersteuerung 130-S weitergeleitet.

Beispielsweise kann an der ersten Datenschnittstelle 142 ein Notabschaltsignal 406 vom Fahrzeug erhalten werden. In Reaktion auf das erhaltene Notabschaltsignal 406 gibt die Systemsteuerung 140 an das Schaltschütz oder die Schaltschütze 170 des eigenen Energiespeichers 110-M und über den externen Datenbus 132 an alle anderen Schaltschütze 170 ein Steuersignal 408 zur Trennung (d.h. Potenzialfreischaltung) der Hochvoltschnittstellen 114 aus.

Durch die mit der Systemsteuerung 140 verbundene erste Datenschnittstelle 142 ist eine einzige Kommunikationsschnittstelle zum Fahrzeug bereitgestellt, so dass das TES-System 100 hinsichtlich der Kommunikation mit dem Funktionsnetz 150 des Fahrzeugs einem einzigen Energiespeicher mit entsprechenden Speichereigenschaften gleicht. Vorzugsweise kann durch Konfiguration der Parameter der Energiespeichersteuerung 130 jeder einzelne Energiespeicher 110 wahlweise als unverbundener Einzel-Energiespeicher, als Master-Energiespeicher 110-M im Verbund des TES-Systems 100 oder als Slave-Energiespeicher 110-S im Verbund des TES-Systems 100 konfiguriert werden.

Die Systemsteuerung 140 gibt mit dem Systemsignal 404 beispielsweise einen aggregierten gemeinsamen Zustand (oder Status) aller zum TES-System 100 gehörenden Energiespeicher 110 aus. Jedes Signal 402, das von einer der Slave-Energiespeichersteuerungen 130-S ausgegeben wird, wird in der Master-Energiespeichersteuerung 130-M von der Systemsteuerung 140 mit den entsprechenden Signalen 402 (soweit vorhanden) der anderen Energiespeicher 110 aggregiert und als ein gemeinsamer Wert als das Systemsignal 404 nach außen zum Fahrzeug über die erste Datenschnittstelle 142 kommuniziert.

Die Aggregation beinhaltet auch eine Kontrollfunktion. Beispielsweise umfasst die Kontrollfunktion eine Überprüfung des Verbindungsstatus aller Energiespeicher 110 am externen Datenbus 132. Alternativ oder ergänzend umfasst die Kontrollfunktion eine Plausibilitätsprüfung der von den Slave-Energiespeichersteuerungen 130-S erhaltenen Signale. Die Plausibilitätsprüfung vergleicht das erhaltene Signal mit für den Signaltyp in der Systemsteuerung 140 gespeicherten Grenzwerten (z. B. Stromgrenzen) für den jeweiligen Energiespeicher 110-S.

Ist ein erhaltenes Signal fehlerhaft, nicht plausibel oder nicht vorhanden, führt die Systemsteuerung 140 eine Fehlerreaktion aus.

Bestimmen die Daten 402 elektrotechnische Größen (beispielsweise einen momentanen Strom, einen maximal entnehmbaren Strom, eine momentane Spannung oder eine Restladung), berechnet die Systemsteuerung 140 in Abhängigkeit der Verschaltung der Hochvoltschnittstellen 114 die aggregierte elektrotechnische Größe und gibt diese als das Systemsignal aus. Die verwendete Verschaltung der Hochvoltschnittstellen 114 wird im Zuge der Konfiguration des Master-Energiespeichers 110-S in der Systemsteuerung 140 gespeichert. Beispielsweise sind in der Systemsteuerung 140 in Abhängigkeit von der Verschaltung Aggregationsregeln gespeichert. Die Aggregationsregeln können sowohl für elektrotechnische Größen als auch Zustandsgrößen (beispielsweise Ladezustand oder Alterungszustand) definiert sein.

Die Signale 402 der einzelnen Energiespeicher 110, die eine gemessene Temperatur angeben, werden durch Auffinden eines Extremwerts unter den signalisierten Temperaturwerten aggregiert. Beispielsweise wird unter allen signalisierten Temperaturwerten, die größer als 0°C sind, der größte Temperaturwert im Systemsignal 404 ausgegeben. Alternativ oder ergänzend wird unter allen signalisierten Temperaturwerten, die kleiner oder gleich 0°C sind, der kleinste Temperaturwert im Systemsignal 404 ausgegeben.

Vorzugsweise werden die einzelnen Energiespeicher 110 durch eine gemeinsame Kühlmittelzirkulation in einem Betriebstemperaturbereich gehalten. Unter den von den einzelnen Energiespeichern 110 signalisierten Temperaturwerten des Kühlmittels wird der größte Temperaturwert als das Systemsignal ausgegeben.

Die von den einzelnen Energiespeichern 110 erhaltenen Signale 402 geben optional eine Ladung (z. B. in Coulomb, beispielsweise eine verbleibende Restladung) an. Die Summe der signalisierten Ladungen wird im Systemsignal 404 ausgegeben.

Optional geben die Signale 402 für jeden verfügbaren Energiespeicher 110 einen Maximalstrom an. Beispielsweise wird der kleinste Maximalstrom (aus den signalisierten Maximalströmen der einzelnen Energiespeicher 110) mit der Anzahl verfügbarer Energiespeicher 110 multipliziert und im Systemsignal 404 ausgegeben. Ein Energiespeicher 110 ist verfügbar, wenn von ihm keine Fehlermeldung vorliegt und kein Fehler durch die Systemsteuerung 140 festgestellt wurde.

Dadurch kann sichergestellt werden, dass jeder einzelne Energiespeicher 110 innerhalb der für seine Eigensicherheit fortlaufend geprüften Grenzen betrieben wird. Ferner kann durch den Ausschluss fehlerhafter Energiespeicher 110 aufgrund der parallelen Verschaltung der Hochvoltschnittstellen 140 mit nur einem Teil der Energiespeicher 110 das Fahrzeug betrieben werden. Dadurch kann ein redundanter Betrieb (z. B. bei einer Überkapazität an Energiespeichern 110) oder ein Notbetrieb (z. B. ein sogenannter "Limp Home Mode") realisiert werden.

Fehlerhafte Energiespeicher 110 werden mittels des jeweiligen Schaltschützes oder der jeweiligen Schaltschütze 170 vom Leistungsnetz 160 getrennt. Jeder einzelne Energiespeicher 110 implementiert seine Eigensicherheit. Dadurch kann die Systemsteuerung 140 ohne Sicherheitsrelevanz sein.

Optional geben die Signale 402 der einzelnen Energiespeicher 110 einen Energieinhalt des jeweiligen Energiespeichers 110 an. Das Systemsignal 404 gibt einen entnehmbaren Gesamtenergieinhalt an. Das Systemsignal 404 kann auf einer (optional gewichteten) Summe der einzelnen Energieinhalte basieren. Der Beitrag der einzelnen Energieinhalte jedes Energiespeichers 110 zum entnehmbaren Gesamtenergieinhalt kann aus einem anteiligen Batteriestrom bestimmt werden.

Auf Grundlage eines von jedem Energiespeicher 110 signalisierten Innenwiderstandswerts des jeweiligen Energiespeichers 110 kann gemäß der Verschaltung der Hochvoltschnittstellen 114 der Gesamtwiderstand berechnet und als Systemsignal 404 ausgegeben werden. Alternativ oder ergänzend bestimmt die Systemsteuerung 140 auf Grundlage der signalisierten Innenwiderstandswerte den anteiligen Batteriestrom.

Optional erhält die Systemsteuerung 140 von jedem Energiespeicher 110 Signale 402 mit Lebensdauer-optimierten Grenzwerten (für eine Obergrenze und eine Untergrenze) des Ladezustands (auch als "State of Charge" oder SoC bezeichnet). Zur Aggregation der Lebensdauer-optimierten Grenzwerte des Ladezustands wählt die Systemsteuerung 140 die Lebensdauer-optimalen Grenzwerte des Ladezustands aus, welche mit der daraus resultierenden Stromverteilung aller Energiespeicher 110 möglichst optimal auf eine Soll-Alterungskurve zurückführen. Dabei wird die resultierende Stromverteilung der einzelnen Energiespeicher 110 aus dem von den einzelnen Energiespeichern 110 signalisierten Innenwiderstandswerten von der Systemsteuerung 140 berechnet.

Die einzelnen Energiespeicher 110 können ferner einen Alterungszustand (auch als "State of Health" oder SoH bezeichnet) des jeweiligen Energiespeichers 110 angeben. Der Alterungszustand der einzelnen Energiespeicher 110 wird von der Systemsteuerung 140 als Fehlerindikator des jeweiligen Energiespeichers 110 (z. B. beim Überschreiten von Grenzwerten) und/oder zur Berechnung eines Lebensdauer-optimierten Grenzwerts für den Strom des jeweiligen Energiespeichers 110 oder des TES-Systems 100 verwendet.

Alternativ oder ergänzend kann der Ladezustand und/oder der Alterungszustand nach denselben Aggregationsregeln berechnet werden, die auch für die Zustandsaggregation der einzelnen Speicherzellen 122 innerhalb der Zellmodulsteuerung 124 implementiert sind.

Die Signale 402 der einzelnen Energiespeicher 110 geben einen Spannungswert (beispielsweise einen gegenwärtigen und/oder einen vorhergesagten Spannungswert) für die einzelnen Energiespeicher 110 an. Das Systemsignal 404 für den entsprechenden Spannungswert wird gemäß der Verschaltung der Hochvoltschnittstellen 114 von der Systemsteuerung 140 berechnet.

Allgemein kann ein Systemzustand 404 des TES-Systems 100 bestimmt werden, indem der sicherste oder konservativste Zustand aus den von den Energiespeichern 110 als verfügbar signalisierten Zuständen 402 ausgewählt wird. Alternativ oder ergänzend kann das TES-System 100 gemäß dem leistungsschwächsten Energiespeichersystem 110 betrieben wird. Der sicherste Zustand kann der für den momentanen Betrieb aller Energiespeicher 110 zuverlässigste Zustand sein. Der konservativste Zustand kann eine Lebensdauer aller Energiespeicher 110 maximieren.

In der Kommunikationsrichtung vom Fahrzeug zu den Energiespeichern 110 werden alle Fahrzeugsignale 406, welche die Master-Energiespeichersteuerung 110-M vom Fahrzeug erhält, an den jeweiligen Slave-Funktionsumfang 134 der einzelnen Energiespeichersteuerungen 130 verteilt. Gegebenenfalls wird das Fahrzeugsignal dabei in ein für jede einzelne Energiespeichersteuerung 130 spezifisches Steuersignal 408 umgesetzt.

Die Aggregation und Verteilung der Signale durch die Systemsteuerung 140 betrifft auch die Diagnose des TES-Systems 100 (z. B. Diagnoseanforderungen vom Fahrzeug an die Systemsteuerung 140 und Diagnosemeldungen von der Systemsteuerung 140 an das Fahrzeug). Diagnosemeldungen der einzelnen Energiespeichersteuerungen 130 werden durch die Systemsteuerung 140 gesammelt und aggregiert an das Fahrzeug über die erste Datenschnittstelle 142 ausgegeben. Die Aggregation kann beispielsweise die Bildung eines einheitlichen Datensatzes in einem Datenpaket des Systemsignals 404 umfassen. Im Datensatz sind Diagnosewerte bezüglich der einzelnen Zellmodule 120 ohne eine Gruppierung in Energiespeicher 110 aufgelistet.

Diagnoseabfragen (die auch als Diagnoseroutinen bezeichnet werden) vom Fahrzeug werden an der ersten Datenschnittstelle 142 der Systemsteuerung 140 erhalten und an den bestehenden Funktionsumfang 134 der einzelnen Energiespeichersteuerungen 130 weitergeleitet.

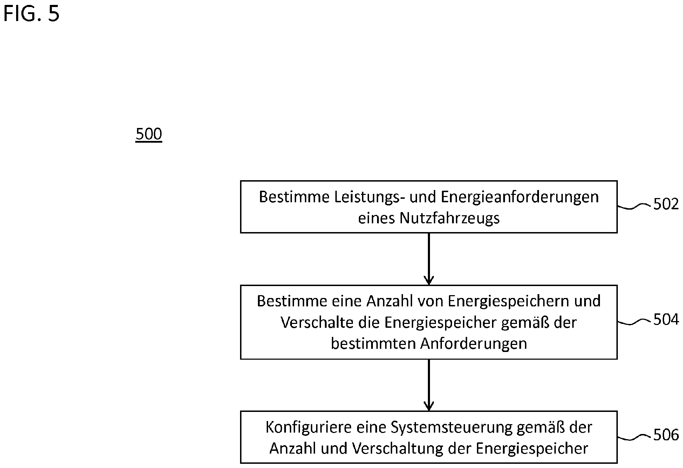

Figur 5 zeigt ein Ablaufdiagramm für ein Verfahren 500 zum Konfigurieren des TES-Systems 100. Für ein gegebenes Fahrzeug, beispielsweise ein Nutzfahrzeug, wird in einem Schritt 502 mindestens eine elektrische Anforderung (z. B. hinsichtlich Leistung und/oder Energie des Antriebsstrangs) bestimmt. Zur Erfüllung der Anforderung wird in einem Schritt 504 eine Anzahl und Verschaltung von Energiespeichern 110 bestimmt, beispielsweise unter Berücksichtigung eines im Fahrzeug verfügbaren Bauraums.

In einem Konfigurationsschritt 506 wird die Funktion der Systemsteuerung 140 in nur einem der Energiespeicher 110, dem sogenannten Master-Energiespeicher 110-M, aktiviert. Nur der Master-Energiespeicher 110-M wird zur Datenkommunikation mit dem Funktionsnetz 150 des Fahrzeugs verbunden. Alle weiteren Energiespeicher 110, die sogenannten Slave-Energiespeicher 110-S, werden zur Datenkommunikation mit dem Master-Energiespeicher 110-M verbunden. In der Systemsteuerung 140 des Master-Energiespeichers 110-M werden Parameter gemäß der Anzahl und der bestimmten Verschaltung der Energiespeicher 110 gesetzt. Die Hochvoltschnittstellen 114 aller Energiespeicher 110 werden gemäß der bestimmten Verschaltung mit dem Leistungsnetz 160 des Fahrzeugs verbunden.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Traktionsenergiespeichersystem
- 110: Energiespeicher
- 112: Gehäuse des Energiespeichers
- 114: Hochvoltschnittstelle
- 120: Zellmodul
- 122: Speicherzellen
- 124: Zellmodulsteuerung
- 126: Interner Datenbus
- 127: Anschlussklemme
- 128: Stromschiene
- 130: Energiespeichersteuerung
- 132: Externer Datenbus
- 134: Funktionsumfang der Energiespeichersteuerung im Einzelbetrieb
- 140: Systemsteuerung
- 142: Erste Datenschnittstelle
- 144: Zweite Datenschnittstelle
- 150: Funktionsnetz des Fahrzeugs
- 160: Leistungsnetz des Fahrzeugs
- 170: Schaltschütz
- 172: Steuerverbindung zwischen Energiespeichersteuerung und Schaltschütz
- 202: CAN-Bus des Funktionsnetzes
- 402: Signal des Energiespeichers
- 404: Systemsignal
- 406: Fahrzeugsignal
- 408: Steuersignal
- 500: Konfigurationsverfahren
- 502: Schritt der Energiebestimmung
- 504: Schritt der Anzahlbestimmung
- 506: Schritt der Konfiguration

## Patentansprüche

1. Traktionsenergiespeichersystem (100) für ein Fahrzeug, umfassend:
mehrere elektrische Energiespeicher (110), wobei jeder der Energiespeicher mehrere Zellmodule (120) und eine Energiespeichersteuerung (130) umfasst, und jedes der Zellmodule mehrere Speicherzellen (122) und eine Zellmodulsteuerung (124) umfasst, und wobei jede der Zellmodulsteuerungen dazu ausgebildet ist, die Speicherzellen im jeweiligen Zellmodul betreffende Messwerte auszugeben, und jede der Energiespeichersteuerungen dazu ausgebildet ist, die Messwerte von den Zellmodulen im jeweiligen Energiespeicher zu erhalten und abhängig von den erhaltenen Messwerten ein Signal (402) zu erzeugen; und
eine Systemsteuerung (140), die dazu ausgebildet ist, die Signale von den Energiespeichersteuerungen zu erhalten, die erhaltenen Signale zu einem Systemsignal (404) zu aggregieren und das Systemsignal auszugeben.

2. Traktionsenergiespeichersystem nach Anspruch 1, wobei die Systemsteuerung (140) ferner dazu ausgebildet ist, ein Fahrzeugsignal (406) zu erhalten, zu analysieren und abhängig von der Analyse ein Steuersignal (408) an mindestens eine der Energiespeichersteuerungen (130) auszugeben.

3. Traktionsenergiespeichersystem nach Anspruch 1 oder 2, wobei eine der Energiespeichersteuerungen (130) die Funktion der Systemsteuerung (140) ausführt.

4. Traktionsenergiespeichersystem nach einem der Ansprüche 1 bis 3, wobei die Funktion der Systemsteuerung (140) in jeder der Energiespeichersteuerungen (130) implementiert ist und in einer der Energiespeichersteuerungen zur Ausführung aktiviert ist.

5. Traktionsenergiespeichersystem nach einem der Ansprüche 3 oder 4, wobei jeder der Energiespeicher ferner eine erste Datenschnittstelle (142) und eine zweite Datenschnittstelle (144) umfasst, die jeweils im Energiespeicher (110) mit der Energiespeichersteuerung (130) verbunden ist,
wobei bei den Energiespeichern (110-S), welche nicht die Funktion der Systemsteuerung ausführen, die erste Datenschnittstelle (142) außerhalb des Energiespeichers unverbunden ist, und die zweite Datenschnittstelle (144) verbunden ist zur Ausgabe des Signals (402) an die zweite Datenschnittstelle (144) des Energiespeichers (110-M), welcher die Funktion der Systemsteuerung (140) ausführt; und
wobei bei dem Energiespeicher (110-M), welcher die Funktion der Systemsteuerung (140) ausführt, die erste Datenschnittstelle (142) außerhalb des Energiespeichers mit dem Fahrzeug verbunden ist zur Ausgabe des Systemsignals (404), und die zweite Datenschnittstelle (144) verbunden ist zum Erhalt der Signale von den zweiten Datenschnittstellen (144) der Energiespeicher (110-S), welche nicht die Funktion der Systemsteuerung (140) ausführen.

6. Traktionsenergiespeichersystem nach einem der Ansprüche 1 bis 5, wobei jeder der Energiespeicher (110) ferner umfasst:
eine Hochvoltschnittstelle (114) zum Austausch elektrischer Energie mit einem Antriebsstrang des Fahrzeugs; und
ein oder mehrere von der Energiespeichersteuerung (130) des jeweiligen Energiespeichers (110) gesteuerte Schaltschütze (170), die dazu ausgebildet sind, die Zellmodule (120) des jeweiligen Energiespeichers mit der Hochvoltschnittstelle wahlweise zu verbinden und zu trennen.

7. Traktionsenergiespeichersystem nach den Ansprüchen 5 und 6, wobei die Systemsteuerung (140) ferner dazu ausgebildet ist, über die erste Datenschnittstelle (142) ein Notabschaltsignal vom Fahrzeug zu erhalten, und beim Erhalt des Notabschaltsignals ein Steuersignal (408) zur Trennung der Schaltschütze (170) an die Energiespeichersteuerungen (130) auszugeben.

8. Traktionsenergiespeichersystem nach Anspruch 6 oder 7, wobei die Hochvoltschnittstellen (114) der Energiespeicher (110) parallel geschaltet sind.

9. Traktionsenergiespeichersystem nach einem der Ansprüche 6 bis 8, wobei die Signale (402) einen Zustand des jeweiligen Energiespeichers (110) angeben, und/oder das aggregierte Systemsignal (404) einen Systemzustand des Traktionsenergiespeichersystems (100) angibt.

10. Traktionsenergiespeichersystem nach Anspruch 9, wobei die Energiespeichersteuerungen (130) jeweils dazu ausgebildet sind, den Zustand des jeweiligen Energiespeichers (110) festzustellen und bei Feststellung eines unzulässigen Betriebszustands das jeweilige oder die jeweiligen Schaltschütze (170) zu trennen.

11. Traktionsenergiespeichersystem nach Anspruch 10, wobei die Feststellung des Zustands ein Messen des durch den jeweiligen Energiespeicher (110) abgegebenen Stroms umfasst, und der unzulässige Betriebszustand bei Überschreiten eines Maximalstroms festgestellt wird.

12. Traktionsenergiespeichersystem nach Anspruch 11, wobei die Signale (402) den Maximalstrom des jeweiligen Energiespeichers (110) angeben, und das aggregierte Systemsignal das *n*-Fache des Kleinsten der Maximalströme angibt, wobei n die Anzahl der Energiespeicher (110) ist, für die kein unzulässiger Betriebszustand festgestellt ist.

13. Traktionsenergiespeichersystem nach einem der Ansprüche 1 bis 12, wobei jeder der Energiespeicher (110) in jeweils einem eigenen Gehäuse (112) angeordnet ist.

14. Verfahren (500) zum Konfigurieren eines Traktionsenergiespeichersystems (100) für ein Fahrzeug, umfassend:
Bestimmen (502) einer Energieanforderung des Fahrzeugs;
Bestimmen (504), abhängig von der Energieanforderung, einer Anzahl an elektrischer Energiespeicher (110), wobei jeder der Energiespeicher mehrere Zellmodule (120) und eine Energiespeichersteuerung (130) umfasst, und jedes der Zellmodule mehrere Speicherzellen (122) und eine Zellmodulsteuerung (124) umfasst, und wobei jede der Zellmodulsteuerungen dazu ausgebildet ist, die Speicherzellen im jeweiligen Zellmodul betreffende Messwerte auszugeben, und jede der Energiespeichersteuerungen dazu ausgebildet ist, die Messwerte von den Zellmodulen im jeweiligen Energiespeicher zu erhalten und abhängig von den erhaltenen Messwerten ein Signal (402) zu erzeugen; und
Konfigurieren (506) einer Systemsteuerung (140), die Signale von den Energiespeichersteuerungen zu erhalten, die erhaltenen Signale zu einem Systemsignal (404) zu aggregieren und das Systemsignal auszugeben.

15. Verfahren zum Konfigurieren eines Traktionsenergiespeichersystems (100) nach Anspruch 14, wobei die Funktion der Systemsteuerung (140) in jeder der Energiespeichersteuerungen implementiert ist, und das Konfigurieren (506) der Systemsteuerung (140) umfasst:
Aktivieren der implementierten Funktion zur Ausführung der Funktion der Systemsteuerung (140) in einer der Energiespeichersteuerungen (130-M); und
Deaktivieren der implementierten Funktion bei allen anderen Energiespeichersteuerungen (130-S).
